# EUROPEAN PATENT SPECIFICATION

(11) **EP 2 881 882 B1**
(45) Date of publication and mention of the grant of the patent: **01.03.2017**
(21) Application number: 14161902.3
(22) Date of filing: 27.03.2014
(51) Int. Cl.: G06F 21/55, G06F 21/62

(54) **System and method for blocking elements of application interface**
System und Verfahren zum Blockieren von Elementen einer Anwendungsschnittstelle
Système et procédé permettant de bloquer des éléments d'interface d'application

(30) Priority: 05.12.2013 RU 2013153762; 27.02.2014 US 201414192339
(43) Date of publication of application: 10.06.2015
(73) Proprietor: Kaspersky Lab, ZAO, Moscow 125212 (RU)
(72) Inventor: Filatov, Konstantin M., 125212 Moscow (RU); Yablokov, Victor V., 125212 Moscow (RU)
(74) Representative: Sloboshanin, Sergej

(56) References cited:
- EP-A2- 2 642 718
- WO-A1-2008/048800
- US-A1- 2003 217 287
- US-A1- 2013 276 105
- US-B1- 6 732 367

## Description

### Background of the Invention

### Field of the Invention

The present invention is related to application interfaces and, in particular, to a method and system for blocking application interface elements based on certain restrictions.

### Description of the Related Art

Modem applications are more complex than in the past, and the applications have complex user interfaces that reflect functionality of the application. A typical application interface has control elements: menus, command lines, buttons, labels, text boxes, lists, etc. implemented in a graphic form. A user has access to all visible interface elements and can trigger the corresponding application functions by I/O devices such as a keyboard, a mouse, a joystick, a touch screen feature, etc.

Typically, the interface elements reflect their functionality and properties, which makes it easier for a new user to work with the application. However, in some cases, certain application functionality needs to be restricted (or blocked). For example, in cases of parental control, certain application features or links need to be blocked due to unsuitable content. Game applications have in-game purchase options that may not be allowed by the parents. Parents may want to allow a child to use the game application, but do not allow him to spend real money on in-game purchases. In such cases there is no need to block the entire application.

Several conventional solutions exist for analyzing user interaction with the application through the application interface. Patent publication WO2012176365A1 discloses replacing one screen image with another one using an application interface generation module. The application interface is generated based on a set of attributes of the interface elements.

Patent publication US 20080148235A1 describes an algorithm for analyzing application interfaces and comparing them against the design specifications provided by the user. An interface analysis system determines if the interface elements are displayed correctly. However, the conventional solutions analyze user interaction with the application via the interface, but do not limit the access to certain interface elements.

The document WO 2008/048800 discloses a system and method that facilitates visually identifying authentic UI objects, bundles, or windows. A detection component can detect when user-based input has activated a verification mode with respect to one or more trusted UI objects rendered on-screen. A verification component can verify at least one of a source and identity associated with one or more UI objects in order to ensure the integrity related therewith.

The document US 2013/276105 refers to a system, method, and computer program product which are provided for detecting unwanted data based on an analysis of an icon. In use, an icon is analyzed. Furthermore, unwanted data is detected based on the analysis.

Accordingly, a method for limiting access to the application interface is desired.

### Summary of the Invention

The present invention is related to application interfaces and, in particular, to a method and system for blocking application interface elements based on certain restrictions that substantially obviates one or several of the disadvantages of the related art.

The present invention provides a method, system and computer program product for blocking access to restricted elements of application interface and covering the restricted elements by trusted interface elements. The system includes an analyzer module, a database of restricted elements and a blocking module. The analyzer module is configured to detect interface elements of an active application rendered on a computer or a mobile device. The analyzer module determines if an application interface element is restricted by comparing the application interface element against the known restricted interface elements from the database. If the restricted element is detected, the analyzer module sends the data about the restricted element to the blocking module. The blocking module covers the restricted interface element by a trusted interface element or by an image.

Additional features and advantages of the invention will be set forth in the description that follows, and in part will be apparent from the description, or may be learned by practice of the invention. The advantages of the invention will be realized and attained by the structure particularly pointed out in the written description and claims hereof as well as the appended drawings.

It is to be understood that both the foregoing general description and the following detailed description are exemplary and explanatory and are intended to provide further explanation of the invention as claimed.

### Brief Description of the Attached Figures

The accompanying drawings, which are included to provide a further understanding of the invention and are incorporated in and constitute a part of this specification, illustrate embodiments of the invention and, together with the description, serve to explain the principles of the invention.

In the drawings:
**FIG. 1** illustrates an architecture of a system for blocking the application interface elements, in accordance with the exemplary embodiment;
**FIG. 2** illustrates an algorithm for blocking the application interface elements, in accordance with the exemplary embodiment;
**FIG. 3** illustrates a screen shot depicting blocking the restricted interface elements, in accordance with the exemplary embodiment;
**FIG. 4** illustrates a schematic of an exemplary computer system or a server that can be used for implementation of the invention.

### Detailed Description of the Preferred Embodiments

Reference will now be made in detail to the preferred embodiments of the present invention, examples of which are illustrated in the accompanying drawings.

According to the exemplary embodiment, a method, system and computer program product for blocking application interface elements is provided. The application has the application interface (or GUI) with the interface elements providing access to the various functions of the application. An active application displays its interface as a foreground on a computer or a mobile device screen. The user interacts with the application via the application interface elements such as a window, a button, a scroll bar, a flag, a link, an icon, a menu, a checkbox, etc. The interface elements are treated as parts of a particular application. The elements can be generic or unique.

According to an exemplary embodiment, if the interface contains some elements that trigger undesired actions, the elements are blocked by being covered by other (trusted) interface elements or by images. Note that the user may not be able to close the application with the undesired elements due to not having admin rights to close applications. This, advantageously, allows for running the application instead of terminating it because some undesired (restricted) elements are detected. The image or the trusted interface elements can be rendered using graphic functionality of a particular OS. An image or a trusted interface element is constantly displayed over the restricted interface element. The image can be, for example, a white or a black square of a size of the restricted element being covered. An exemplary code for generating such an image is as follows:

```
 case WM_PAINT:
 {
 HDC hDC=::GetDC(NULL);
 ::Rectangle(hDC,500,500,600,600);
 ::ReleaseDC(NULL, hDC);
 }
 break;
```

According to the exemplary embodiment, the trusted interface element, which covers the restricted interface element, can belong to an anti-virus application. For example, the trusted element can be a window displaying a warning about the restricted element. The restricted elements can belong to a malware application. Clicking on these elements can result in infection of the computer system hosting the application. According to the exemplary embodiment these potentially malicious application elements are blocked by being covered by other trusted elements.

The undesired elements can be also covered by images of different color. Additionally, the elements can be covered by a similar (by shape and color) element with a different caption (i.e., for example, a button with an alternative caption or with no caption at all). Also, an identical button can be used with a different functionality. An "OK" button can perform closing of an application instead of agreeing to run some potentially malicious or unapproved components.

Other restricted elements are the elements that allow access to confidential or age-restricted data. The interface elements that allow for execution of payments can also be restricted. For example, an interface element can allow for sending an SMS or connecting to the Internet, which may result in additional charges. The restricted element can be determined based on a user feedback and analysis of logged user activities. The analysis can be performed by a user, as well as by the developers. The user can mark the elements of the interface that seem too suspicious, for example, exercising parental control. Then, these elements are analyzed for malware by developers.

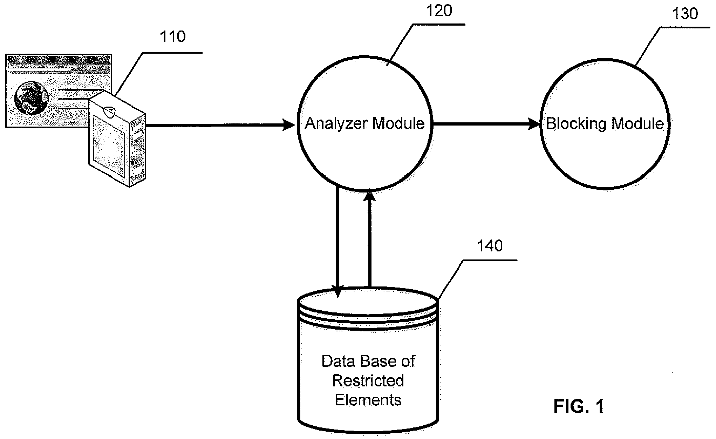

According to the exemplary embodiment, the restricted elements are blocked by trusted elements or images that cover the restricted element. **FIG. 1** illustrates an architecture of a system for blocking the application interface elements, in accordance with the exemplary embodiment. The system includes an analyzer module **120,** a database of restricted elements **140** and a blocking module **130.** The analyzer module **120** is configured to detect interface elements of an active application **110** rendered on a computer or a mobile device. The analyzer module **120** determines if an application interface element is restricted by comparing the application interface element against the known restricted interface elements from the database **140.** The database **140** can be updated from the AV server or from a cloud. If a restricted element is detected, the analyzer module **120** sends the data about the restricted element to the blocking module **130.** The blocking module **130** covers the restricted interface element by a trusted interface element or by an image. The trusted interface element can be selected based on configurations. If a user selects an image, the trusted image is used. If the user selects an interface element, the window with a password is displayed and the user can replace the element upon entering the password.

According to the exemplary embodiment, the interface element of the application **110** can be detected in a synchronous or asynchronous mode. In the synchronous mode, the analyzer module **120** detects the interface elements right after they are displayed by the application. In the asynchronous mode, the analyzer module **120** detects the interface elements with a delay. The display of the element can be detected based on a system log or by interception of the system messages. Alternatively, the analyzer module **120** can analyze the active windows. For example, Symbian platform has a class RwindowGroup, which has a method EnableFocusChangeEvents.

According to the exemplary embodiment, the blocking module is an application or a part of an anti-virus module. The covering of the restricted elements is implemented on a computer or a mobile device where the application is installed. The database of the restricted elements can be implemented on the cloud storage. According to one exemplary embodiment, the database of the known restricted interface elements **140** stores the samples of known restricted (undesirable) interface elements and parameters of the restricted elements. All interface elements have their IDs. The elements can be searched based on a combination of IDs, based on templates (i.e., a set of elements of a dialog window). For example, in MS Windows a set of identifiers can be a set of coordinates X, Y and parent HWND. Example of a template is a window of certain kind with a certain number of elements.

The analyzer module **120** compares the samples and parameters of the interface element against the known restricted elements from the database **140.** For example, the main parameter for comparison can be an identifier (i.e., an alphanumeric value) of the interface window and the dialog window can be used as a comparison element.

According to another exemplary embodiment, the restricted elements can be determined by content analysis of the interface elements. The content analysis can reveal links to adult materials or to confidential data. The content analysis of the images can detect adult content or restricted data. The database **140** can be implemented as a hierarchical database (e.g., IMS, TDMS, System 2000), network-based storages (e.g., Cerebrum, Cronospro, DBVist), relational databases (e.g., DB2, Informix, Microsoft SQL Server), object-oriented databases (e.g., Jasmine, Versant, POET), object-relational databases (e.g., Oracle Database, PostgreSQL, FirstSQL/J, functional, etc.).

According to one exemplary embodiment, the analysis module **120** can detect certain user actions on application interface elements. The user actions can be a mouse click (left or right), pressing key on a keyboard, pressing certain key simultaneously, or pressing the keys in a certain order. In this case, the database **140** contains samples and templates of known restricted user actions. The analyzer module **120** detects user actions on interface elements and compares the user actions against the restricted user actions from the database **140.**

If a restricted user action is detected, the analyzer module **120** provides the related data to the blocking module **130.** Examples of the restricted user actions are a launch of an application that belongs to a certain category (e.g., a known malware application). Some user actions can be aggregated into groups. The main group is the user actions directed to launch of an application by a double click on the application icon on the desktop or mobile device screen, by a click on a link, by pressing of an "Enter" key, combination of keys, by left mouse click on a context menu "open" and a subsequent right mouse click, etc. Entering a path to the executable application file in the console can also launch the application. In the Android OS, the restricted actions are the corresponding touch screen actions that trigger a launch of an application.

A second component of a restricted action is the actual interface element subject to a user action. Pressing on a certain button (e.g., a "Send" button) can be restricted. Other elements can be a line of a context menu, a flag, etc. A third component of the restricted action is the reason why the action is undesirable. The action can be considered restricted based on the reputation of the interface element. For example, if the element is an icon of an application belonging to a restricted category, a double click on the icon must be restricted.

The restricted element can be a button that opens a window restricted for viewing. An example of such a window is a form for entering credit card data and other payment-related data. Another reason for restricting an action is importance of the data that the action may access. Thus, for example, any actions that open text files can be restricted. Another reason for restricting a user action can be an action that is unusual for a particular user. A user can define a set of actions that identify him.

For example, in Android OS, the user can have a following set of actions: unblocking of the screen, activation of a top fold-down menu, switching off vibration, turning on vibration. A user who performs these actions can use all features of the installed applications. However, if an intruder obtains a mobile device password but does not perform a set of required actions in a particular order that uniquely identify the user, the application's interface elements that expose the user's personal data are blocked. Additionally, the mobile device can send a message (e.g., an email) notifying the user of an attempt of unauthorized access to the user's personal data.

According to the exemplary embodiment, a sequence of user actions on the interface elements can be analyzed as a script and the actions can be restricted. The user action script can contain several moves from one interface element to another. The actions script can be generated by the OS. Detection of malicious actions can be performed automatically or in a manual mode. In an automated mode, a depth of four actions can be used. The system forms a set of four actions, where the last one is the undesired one. In the manual mode, the user can mark the sequence of actions that produce undesired event and report it to the AV module.

For example, if an interface window has a "next" button, the use of the action script can be effective when restricted interface elements are used after several jumps to the next window. The action script is considered retractable if its execution will result in displaying of the restricted interface. If the user actions follow a restricted script, the interface elements involved are blocked.

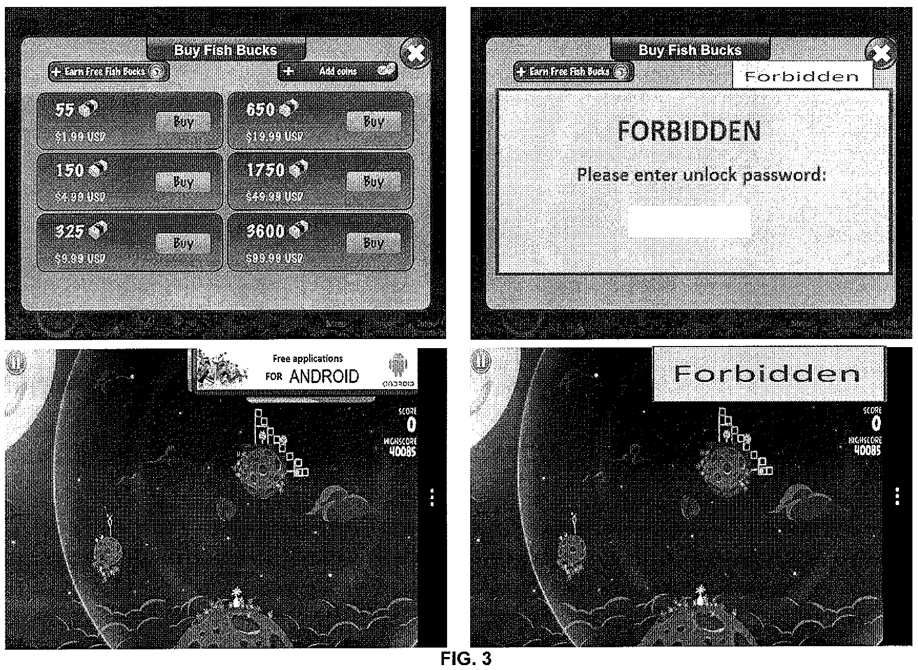

The blocking module **130** covers a restricted element by a trusted interface element or by an image. The trusted element can be selected based on configurations. If a user has a permission to unblock the elements, the restricted element is covered by the trusted element that can be unblocked (removed) if necessary. For example, the button confirming a purchase can have a dialog window with a password used to unblock this button (see **FIG. 3**). In cases when a trusted interface element cannot be used due to size restrictions of the undesired element, this element can be covered by an image of a required size.

If a user decides to work with the application with the restricted element, the restricted element is blocked again. According to the exemplary embodiment, the blocking of the interface element can be temporary. For example, limited access to game applications can be lifted for child's free time period and imposed again at other times.

The system for blocking the interface elements is particularly effective in an environment where all applications have the same level of privileges (e.g., Android OS, MS Windows, Symbian, Tizen, iOS, Linux, etc.). The OS Android keeps a system log (Logcat) of all applications that allows for detection of displayed interface elements. If a trusted application is launched, the system connects to the system log. The system log is populated during the user interactions with the application. The content of the system log is analyzed. Especially, all the records related to an Activity Manager are scanned. The Activity Manager is a component of the Android OS, which is responsible for switching between application interface elements and for controlling the application life cycle. If a record marked "activitymanager" begins with "starting" or "displayed," this means that the user can see the application interface elements. The record also indicates a name of the application package, which is displayed on the screen.

The system periodically checks which application is active on the screen:
final ActivityManager am = (ActivityManager)
mContext.getSystemService(Service.ACTIVITY_SERVICE);
final List<ActivityManager.RunningTaskInfo> tasks = am.getRunningTasks(1);
final ActivityManager.RunningTaskInfo task = tasks.get(0);
final String pkgName = task.topActivity.getPackageName();
task.topActivity
where task.topActivity - is an interface element, which is currently displayed on the screen; pkgName - is a name of the application package currently displayed on the screen.

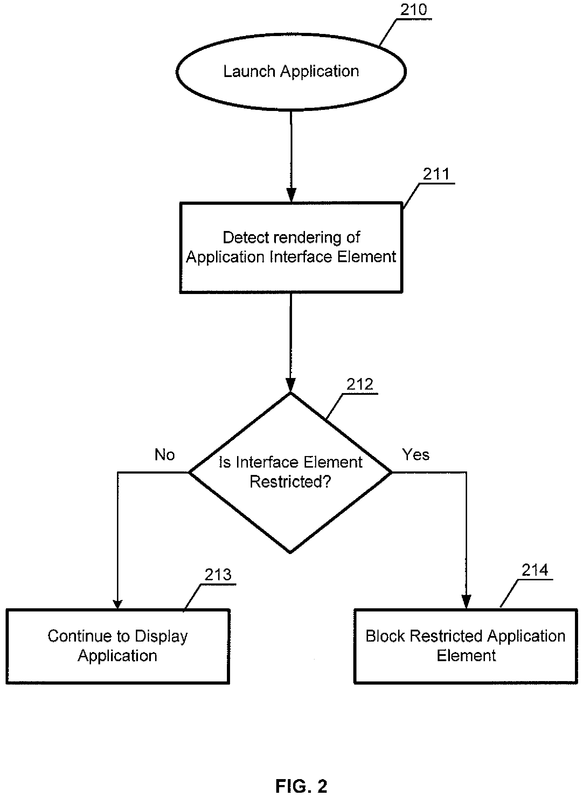

According to the exemplary embodiment, in order to detect restricted interface elements, black lists of application packages and interface elements can be used. In this case, the displayed interface elements are compared against the interface elements from the black list. **FIG. 2** illustrates an algorithm for blocking the application interface elements, in accordance with the exemplary embodiment. In step **210** an active application renders at least one interface element of application **110 (****FIG. 1****).** In step **211** the analyzer **120** detects the rendered interface element of the application **110.** In step **212** the analyzer **120** determines if the interface element is restricted by comparing the element against known restricted elements from the database **140.** If the interface element is deemed to be not restricted, the user continues to work with the application in step **213.** In step **214,** if the restricted element is detected, the analyzer module **120** sends a notification to the blocking module **130,** which blocks the restricted element by covering it with a trusted element or by an image.

**FIG. 3** illustrates a screen shot depicting blocking the restricted interface elements, in accordance with the exemplary embodiment. **FIG. 3** illustrates the two exemplary cases of blocking the application interface elements. In a first example (top two screen shots) the application offers to buy in-game money using the real money. There are six interface elements that can cause a loss of money. These elements are covered by another element, which allows for unblocking the game interface elements.

In a second example (two bottom screen shots) a user is offered to use a link to a supposedly free application for Android OS. After the link revealed a malicious application, the interface element was blocked by an image with a "Forbidden" label.

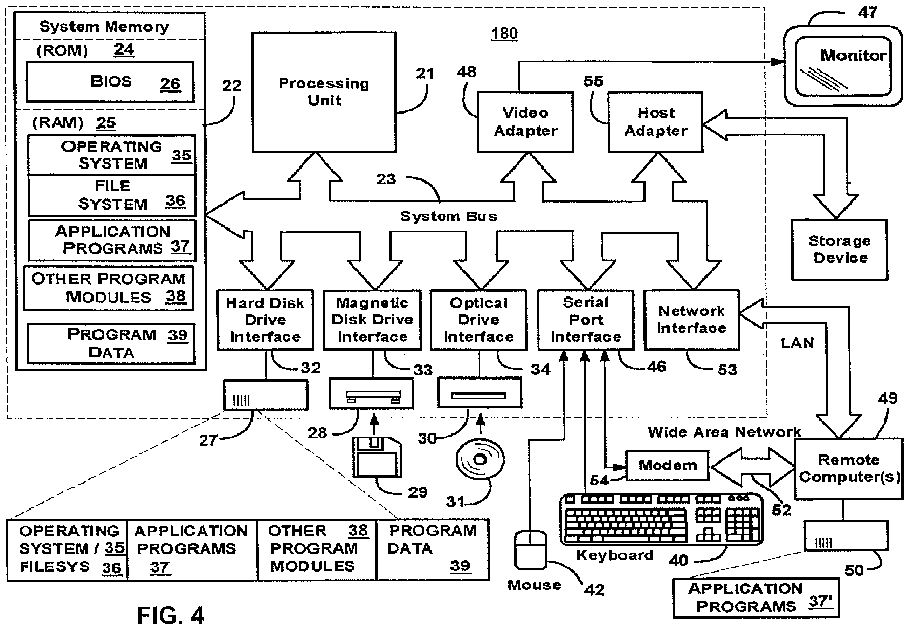

With reference to **FIG. 4****,** an exemplary system for implementing the invention includes a general purpose computing device in the form of a computer system/administration server **20** or the like including a processing unit **21,** a system memory **22,** and a system bus **23** that couples various system components including the system memory to the processing unit **21.**

The system bus **23** may be any of several types of bus structures including a memory bus or memory controller, a peripheral bus, and a local bus using any of a variety of bus architectures. The system memory includes read-only memory (ROM) **24** and random access memory (RAM) **25.** A basic input/output system **26** (BIOS), containing the basic routines that help transfer information between elements within the computer **20,** such as during start-up, is stored in ROM **24.**

The computer **20** may further include a hard disk drive **27** for reading from and writing to a hard disk, not shown, a magnetic disk drive **28** for reading from or writing to a removable magnetic disk **29,** and an optical disk drive **30** for reading from or writing to a removable optical disk **31** such as a CD-ROM, DVD-ROM or other optical media. The hard disk drive **27,** magnetic disk drive **28,** and optical disk drive **30** are connected to the system bus **23** by a hard disk drive interface **32,** a magnetic disk drive interface **33,** and an optical drive interface **34,** respectively. The drives and their associated computer-readable media provide non-volatile storage of computer readable instructions, data structures, program modules and other data for the computer **20.**

Although the exemplary environment described herein employs a hard disk, a removable magnetic disk **29** and a removable optical disk **31,** it should be appreciated by those skilled in the art that other types of computer readable media that can store data that is accessible by a computer, such as magnetic cassettes, flash memory cards, digital video disks, Bernoulli cartridges, random access memories (RAMs), read-only memories (ROMs) and the like may also be used in the exemplary operating environment.

A number of program modules may be stored on the hard disk, magnetic disk **29,** optical disk **31,** ROM **24** or RAM **25,** including an operating system **35.** The computer **20** includes a file system **36** associated with or included within the operating system **35,** one or more application programs **37,** other program modules **38** and program data **39.** A user may enter commands and information into the computer **20** through input devices such as a keyboard **40** and pointing device **42.** Other input devices (not shown) may include a microphone, joystick, game pad, satellite dish, scanner or the like.

These and other input devices are often connected to the processing unit **21** through a serial port interface **46** that is coupled to the system bus, but may be connected by other interfaces, such as a parallel port, game port or universal serial bus (USB). A monitor **47** or other type of display device is also connected to the system bus **23** via an interface, such as a video adapter **48.** In addition to the monitor **47,** personal computers typically include other peripheral output devices (not shown), such as speakers and printers.

The computer **20** may operate in a networked environment using logical connections to one or more remote computers **49.** The remote computer (or computers) **49** may be another computer, a server, a router, a network PC, a peer device or other common network node, and typically includes many or all of the elements described above relative to the computer **20,** although only a memory storage device **50** has been illustrated. The logical connections include a local area network (LAN) **51** and a wide area network (WAN) **52.** Such networking environments are commonplace in offices, enterprise-wide computer networks, Intranets and the Internet.

When used in a LAN networking environment, the computer **20** is connected to the local network **51** through a network interface or adapter **53.** When used in a WAN networking environment, the computer **20** typically includes a modem **54** or other means for establishing communications over the wide area network **52,** such as the Internet.

The modem **54,** which may be internal or external, is connected to the system bus **23** via the serial port interface **46.** In a networked environment, program modules depicted relative to the computer **20,** or portions thereof, may be stored in the remote memory storage device. It will be appreciated that the network connections shown are exemplary and other means of establishing a communications link between the computers may be used.

Having thus described a preferred embodiment, it should be apparent to those skilled in the art that certain advantages of the described method and apparatus have been achieved. In particular, those skilled in the art would appreciate that the proposed system and method provide for efficient blocking of restricted application interface elements without blocking the entire application.

The invention is further defined by the following claims.

## Claims

1. A computer-implemented system for blocking application interface elements, the system comprising:
a computer system (20) having an application (110) running on it, wherein the application (110) has an graphical user interface (GUI) with interface elements providing access to various functions of the application (110), wherein the application interface of an active application (110) is displayable as a foreground on a computer or a mobile device screen;
an analysis module (120) configured to analyze one or more interface elements;
a database (140) of restricted application interface elements accessible by the analysis module (120) for determining whether the one or more interface elements are to be blocked; wherein the restricted application interface elements comprise at least one of malware, allow access to confidential data, allow for execution of payments, allow for sending a Short Message Service (SMS), a link for downloading a free application and connecting to the Internet; and
a blocking module (130) configured to block at least one or more interface elements;
wherein the analysis module (120) acquires data from the application (110) and from the database (140) for selecting the at least one of the one or more interface elements to be blocked;
**characterized in that**
the one or more interface elements are blocked for user interaction by overlaying on the at least one of the one or more interface elements a removable trusted application element on the GUI, wherein the trusted application element is constantly displayable over the restricted interface element, allowing running the application (110) instead of terminating it because at least one restricted application interface element is detected, wherein the removable trusted application element is removable to unblock the blocked at least one or more interface elements upon receiving a user request, and
the determining whether the one or more interface elements are to be blocked is based on a content analysis of the interface elements, and
wherein the analysis module (120) is adapted
to detect user actions on the interface elements;
to analyze the user actions; and
to provide the related data to the blocking module to block the interface elements, if the user actions match a restricted pattern,
wherein a sequence of the user actions on the interface elements is analyzed as a script which contains several moves from one interface elements to another.

2. The system of claim 1, wherein application (110) having the restricted application interface element is not closable due to absence by the user of admin rights to close it.

3. The system of claim 1 or 2, wherein the blocking module (130) is configured to block by overlaying the at least one of the one or more interface elements with an image.

4. The system of claim 3, wherein the blocking module (130) is configured to block a dialog window associated with the at least one of the one or more interface elements for buying in-game tokens or in-game money.

5. The system of claim 4, wherein the blocking module (130) blocks the dialog window by overlaying the image over the dialog window.

6. The system of claim 1, wherein the blocking module (130) blocks the at least one of the one or more interface elements upon detecting the link being associated with malicious code.

7. A computer-implemented method for blocking application interface elements, the method comprising:
launching (210) an application (110) on a computer system (20), wherein the application (110) has an graphical user interface (GUI) with interface elements providing access to various functions of the application (110), wherein the application interface of an active application (110) is displayed as a foreground on a computer or a mobile device screen;
detecting (211) interface elements of the application (110) that provide access to various functions displayed on the graphical user interface (GUI);
connecting to a database (140) of restricted application interface elements,
wherein the restricted application interface elements comprise at least one of malware, allow access to confidential data, allow for execution of payments, allow for sending a Short Message Service (SMS), a link for downloading a free application and connecting to the Internet;
determining (212) at least one of the interface elements to be blocked, if the at least one of the interface elements matches at least one of the restricted application interface elements from the database (140) of restricted application interface elements, wherein the determining is based on a content analysis of the interface elements; and
blocking (214) the at least one of the interface elements for user interaction by overlaying on the at least one of the interface elements with a removable trusted element, wherein the trusted application element is constantly displayed over the restricted interface element, allowing running the application (110) instead of terminating it because at least one restricted application interface element is detected, wherein the trusted application element is removable to unblock the blocked at least one or more interface elements upon receiving a user request,
wherein the method further comprising:
detecting user actions on the interface elements;
analyzing the user actions; and
blocking the interface elements, if the user actions match a restricted pattern,
wherein a sequence of the user actions on the interface elements is analyzed as a script which contains several moves from one interface elements to another.

8. The method of claim 7, wherein application (110) having the restricted application interface element is not closable due to absence by the user of admin rights to close it.

9. The method of claim 7 or 8, wherein the blocking (214) comprises overlaying the at least one of the interface elements with an image.

10. The method of claim 7, further comprising blocking (214) the interface elements that offer a user a dialog window for buying in-game tokens or in-game money.

11. The method of claim 7, further comprising periodically checking which active application (110) is rendered to a user.

12. The method of claim 7, wherein the detecting of the interface elements is performed in a synchronous mode.

13. The method of claim 7, wherein the detecting of the interface elements is performed in an asynchronous mode.

14. The method of claim 7, wherein the database of restricted application interface elements employs a black list of interface elements for determining the interface elements to be blocked.

15. The method of claim 7, further comprising employing a black list of application packages for determining the interface elements to be blocked.

16. A computer program product stored in a memory (22, 32, 33, 34) coupled to a processor (21) and executed on the processor (21), **characterized in that** the computer program product is configured to execute the steps of one of claims 7-15.

## Patentansprüche

1. Computerimplementiertes System zum Blockieren von Anwendungsschnittstellenelementen, wobei das System umfasst:
ein Computersystem (20) mit einer darauf laufenden Anwendung (110), wobei die Anwendung (110) eine grafische Nutzerschnittstelle (GNS) mit Schnittstellenelementen aufweist, die Zugang zu verschiedenen Funktionen der Anwendung (110) bieten, wobei die Anwendungsschnittstelle einer aktiven Anwendung (110) als Vordergrund auf einem Bildschirm eines Computers oder eines mobilen Geräts anzeigbar ist;
ein Analysemodul (120), das dafür konfiguriert ist, eines oder mehrere Schnittstellenelemente zu analysieren;
eine Datenbank (140) eingeschränkter Anwendungsschnittstellenelemente, die durch das Analysemodul (120) zugänglich ist, zur Bestimmung, ob das eine oder die mehreren Schnittstellenelemente zu blockieren sind; wobei die eingeschränkten Anwendungsschnittstellenelemente wenigstens eines aus Folgendem umfassen: Schadprogramme, Erlaubnis eines Zugangs zu vertraulichen Daten, Erlaubnis einer Ausführung von Zahlungen, Erlaubnis, eine Kurznachricht (SMS) zu senden, einen Link zum Herunterladen einer kostenlosen Anwendung und zum Verbinden mit dem Internet; und
ein Blockiermodul (130), das dafür konfiguriert ist, wenigstens eines oder mehrere Schnittstellenelemente zu blockieren; wobei das Analysemodul (120) Daten von der Anwendung (110) und von der Datenbank (140) erhält, um das wenigstens eine des einen oder der mehreren zu
blockierenden Schnittstellenelemente auszuwählen;
**dadurch gekennzeichnet, dass**
das eine oder die mehreren Schnittstellenelemente für eine Nutzerinteraktion blockiert werden, indem über das wenigstens eine des einen oder der mehreren Schnittstellenelemente ein entfernbares, vertrauenswürdiges Anwendungselement auf die GNS gelegt wird, wobei das vertrauenswürdige Anwendungselement dauerhaft über dem eingeschränkten Schnittstellenelement anzeigbar ist und ein Laufen der Anwendung (110) anstelle von deren Abbruch ermöglicht, weil wenigstens ein eingeschränktes Anwendungsschnittstellenelement erfasst wird,
wobei das entfernbare, vertrauenswürdige Anwendungselement entfernbar ist, um das wenigstens eine oder die mehreren blockierten Schnittstellenelemente bei Erhalt eines Nutzerbefehls zu freizugeben,
und wobei die Bestimmung, ob das eine oder die mehreren Schnittstellenelemente zu blockieren sind, auf einer Inhaltsanalyse der Schnittstellenelemente beruht, und
wobei das Analysemodul (120) dafür eingerichtet ist,
Nutzeraktionen an den Schnittstellenelementen zu erfassen;
die Nutzeraktionen zu analysieren; und
die entsprechenden Daten dem Blockiermodul zur Verfügung zu stellen, um die Schnittstellenelemente zu blockieren, wenn die Nutzeraktionen einem eingeschränkten Muster entsprechen,
wobei eine Abfolge der Nutzeraktionen an den Schnittstellenelementen als Skript analysiert wird, das mehrere Bewegungen von einem Schnittstellenelement zu einem anderen enthält.

2. System nach Anspruch 1, wobei die Anwendung (110), die das eingeschränkte Anwendungsschnittstellenelement aufweist, aufgrund eines Fehlens von administrativen Rechten zu deren Schließen durch den Benutzer nicht schließbar ist.

3. System nach Anspruch 1 oder 2, wobei das Blockiermodul (130) dafür konfiguriert ist, zu blockieren, indem es über das wenigstens eine des einen oder der mehreren Schnittstellenelemente ein Bild legt.

4. System nach Anspruch 3, wobei das Blockiermodul (130) dafür konfiguriert ist, ein Dialogfenster zu blockieren, das mit dem wenigstens einen des einen oder der mehreren Schnittstellenelemente zum Kauf von Wertmarken innerhalb eines Spiels oder Geld innerhalb eines Spiels in Zusammenhang steht.

5. System nach Anspruch 4, wobei das Blockiermodul (130) das Dialogfenster blockiert, indem es das Bild über das Dialogfenster legt.

6. System nach Anspruch 1, wobei das Blockiermodul (130) wenigstens das eine des einen oder der mehreren Schnittstellenelemente blockiert, wenn ein Link erfasst wird, der mit einem schädlichen Code in Zusammenhang steht.

7. Computerimplementiertes Verfahren zum Blockieren von Anwendungsschnittstellenelementen, wobei das Verfahren umfasst:
Starten (210) einer Anwendung (110) auf einem Computersystem (20), wobei die Anwendung (110) eine grafische Nutzerschnittstelle (GNS) mit Schnittstellenelementen hat, die Zugang zu verschiedenen Funktionen der Anwendung (110) bietet, wobei die Anwendungsschnittstelle einer aktiven Anwendung (110) als Vordergrund auf einem Bildschirm eines Computers oder eines mobilen Geräts angezeigt wird;
Erfassen (211) von Schnittstellenelementen der Anwendung (110), die Zugang zu verschiedenen Funktionen bieten, die an der grafischen Nutzerschnittstelle (GNS) angezeigt werden;
Verbinden mit einer Datenbank (140) eingeschränkter Anwendungsschnittstellenelemente,
wobei die eingeschränkten Anwendungsschnittstellenelemente wenigstens eines aus Folgendem umfassen: Schadprogramme, Erlaubnis eines Zugangs zu vertraulichen Daten, Erlaubnis einer Ausführung von Zahlungen, Erlaubnis, eine Kurznachricht (SMS) zu senden, einen Link zum Herunterladen einer kostenlosen Anwendung und zum Verbinden mit dem Internet;
Bestimmen (212) wenigstens eines der zu blockierenden Schnittstellenelemente, wenn das wenigstens eine der Schnittstellenelemente wenigstens einem der eingeschränkten Anwendungsschnittstellenelemente aus der Datenbank (140) der eingeschränkten Anwendungsschnittstellenelemente entspricht, wobei die Bestimmung auf einer Inhaltsanalyse der Schnittstellenelemente beruht; und
Blockieren (214) des wenigstens einen der Schnittstellenelemente für Nutzerinteraktion, indem über das wenigstens eine der Schnittstellenelemente ein entfernbares, vertrauenswürdiges Element gelegt wird, wobei das vertrauenswürdige Anwendungselement dauerhaft über dem eingeschränkten Schnittstellenelement angezeigt wird und ein Laufen der Anwendung (110) anstelle von deren Abbruch ermöglicht, weil wenigstens ein eingeschränktes Anwendungsschnittstellenelement erfasst wird, wobei das vertrauenswürdige Anwendungselement entfernbar ist, um das wenigstens eine oder die mehreren blockierten Schnittstellenelemente bei Erhalt eines Nutzerbefehls freizugeben,
wobei das Verfahren weiterhin umfasst:
Erfassen von Nutzeraktionen an den Schnittstellenelementen;
Analysieren der Nutzeraktionen; und
Blockieren der Schnittstellenelemente, wenn die Nutzeraktionen einem
eingeschränkten Muster entsprechen,
wobei eine Abfolge der Nutzeraktionen an den Schnittstellenelementen als Skript analysiert wird, das mehrere Bewegungen von einem Schnittstellenelement zu einem anderen enthält.

8. Verfahren nach Anspruch 7, wobei die Anwendung (110), die das eingeschränkte Anwendungsschnittstellenelement aufweist, aufgrund eines Fehlens von administrativen Rechten zu deren Schließen durch den Benutzer nicht schließbar ist.

9. Verfahren nach Anspruch 7 oder 8, wobei das Blockieren (214) umfasst, dass ein Bild über das wenigstens eine der Schnittstellenelemente gelegt wird.

10. Verfahren nach Anspruch 7, ferner umfassend das Blockieren (214) der Schnittstellenelemente, die einem Nutzer ein Dialogfenster zum Kauf von Wertmarken innerhalb eines Spiels oder Geld innerhalb eines Spiels bieten.

11. Verfahren nach Anspruch 7, ferner umfassend periodisches Überprüfen, welche aktive Anwendung (110) einem Nutzer zur Verfügung gestellt wird.

12. Verfahren nach Anspruch 7, wobei das Erfassen der Schnittstellenelemente in einem synchronen Modus durchgeführt wird.

13. Verfahren nach Anspruch 7, wobei das Erfassen der Schnittstellenelemente in einem asynchronen Modus durchgeführt wird.

14. Verfahren nach Anspruch 7, wobei die Datenbank der eingeschränkten Anwendungsschnittstellenelemente eine schwarze Liste von Schnittstellenelementen verwendet, um die zu blockierenden Schnittstellenelemente zu bestimmen.

15. Verfahren nach Anspruch 7, ferner umfassend Verwenden einer schwarzen Liste von Anwendungspaketen zum Bestimmen der zu blockierenden Schnittstellenelemente.

16. Computerprogrammprodukt, das in einem mit einem Prozessor (21) gekoppelten Speicher (22, 32, 33, 34) gespeichert ist und auf dem Prozessor (21) ausgeführt wird, **dadurch gekennzeichnet, dass** das Computerprogrammprodukt dafür konfiguriert ist, die Schritte eines der Ansprüche 7 bis 15 auszuführen.

## Revendications

1. Système mis en oeuvre par ordinateur pour bloquer des éléments d'interface d'application, le système comprenant :
un système informatique (20) ayant une application (110) tournant sur celui-ci, dans lequel l'application (110) a une interface utilisateur graphique (GUI) avec des éléments d'interface donnant accès à diverses fonctions de l'application (110), dans lequel l'interface d'application d'une application (110) active peut être affichée comme un premier plan sur un écran d'ordinateur ou de dispositif mobile ;
un module d'analyse (120) configuré pour analyser un ou plusieurs élément(s) d'interface ;
une base de données (140) d'éléments d'interface d'application restreints accessible par le module d'analyse (120) pour déterminer si le ou les élément(s) d'interface doit/doivent être bloqués ; dans lequel les éléments d'interface d'application restreints comprennent au moins un parmi un maliciel, un accès à des données confidentielles, une exécution de paiements, un envoi d'un message texto (SMS), une liaison pour télécharger une application gratuite et une connexion à Internet ; et
un module de blocage (130) configuré pour bloquer au moins un ou plusieurs élément(s) d'interface ;
dans lequel le module d'analyse (120) acquiert des données depuis l'application (110) et depuis la base de données (140) pour sélectionner l'au moins un du ou des élément(s) d'interface à bloquer ;
**caractérisé en ce que**
le ou les élément(s) d'interface sont bloqués pour une interaction d'utilisateur en superposant sur l'au moins un du ou des élément(s) d'interface un élément d'application de confiance amovible sur la GUI, dans lequel l'élément d'application de confiance peut être affiché de manière constante par-dessus l'élément d'interface restreint, permettant de faire tourner l'application (110) au lieu d'y mettre fin parce que l'au moins un élément d'interface d'application restreint est détecté,
dans lequel l'élément d'application de confiance amovible peut être ôté pour débloquer l'au moins un ou les élément(s) d'interface bloqué(s) à la réception d'une demande d'utilisateur, et
la détermination si le ou les élément(s) d'interface doit/doivent être bloqué(s) est basée sur une analyse de contenu des éléments d'interface, et
dans lequel le module d'analyse (120) est adapté
à détecter des actions d'utilisateur sur les éléments d'interface ;
à analyser les actions d'utilisateur ; et
à fournir les données associées au module de blocage pour bloquer les éléments d'interface, si les actions d'utilisateur correspondent à un motif restreint,
dans lequel une séquence des actions d'utilisateur sur les éléments d'interface est analysée comme un script qui contient plusieurs déplacements d'un élément d'interface à un autre.

2. Système selon la revendication 1, dans lequel l'application (110) ayant l'élément d'interface d'application restreint ne peut être fermée du fait de l'absence par l'utilisateur de droits d'administrateur pour la fermer.

3. Système selon la revendication 1 ou 2, dans lequel le module de blocage (130) est configuré pour bloquer par superposition de l'au moins un du ou des élément(s) d'interface avec une image.

4. Système selon la revendication 3, dans lequel le module de blocage (130) est configuré pour bloquer une fenêtre de dialogue associée avec l'au moins un du ou des élément(s) d'interface pour acheter des jetons intrajeu ou de l'argent intrajeu.

5. Système selon la revendication 4, dans lequel le module de blocage (130) bloque la fenêtre de dialogue par superposition de l'image par-dessus la fenêtre de dialogue.

6. Système selon la revendication 1, dans lequel le module de blocage (130) bloque l'au moins un du ou des élément(s) d'interface à la détection que la liaison est associée avec du code malveillant.

7. Procédé mis en oeuvre par ordinateur pour bloquer des éléments d'interface d'application, le procédé comprenant :
le lancement (210) d'une application (110) sur un système informatique (20), dans lequel l'application (110) a une interface utilisateur graphique (GUI) avec des éléments d'interface donnant accès à diverses fonctions de l'application (110), dans lequel l'interface d'application d'une application (110) active peut être affichée comme un premier plan sur un écran d'ordinateur ou de dispositif mobile ;
la détection (211) d'éléments d'interface de l'application (110) qui donnent accès à diverses fonctions affichées sur l'interface utilisateur graphique (GUI) ;
la connexion à une base de données (140) d'éléments d'interface d'application restreints,
dans lequel les éléments d'interface d'application restreints comprennent au moins un parmi un maliciel, un accès à des données confidentielles, une exécution de paiements, un envoi d'un message texto (SMS), une liaison pour télécharger une application gratuite et une connexion à Internet ;
la détermination (212) d'au moins un des éléments d'interface à bloquer, si l'au moins un des éléments d'interface correspond à au moins un des éléments d'interface d'application restreints de la base de données (140) d'éléments d'interface d'application restreints, dans lequel la détermination est basée sur une analyse de contenu des éléments d'interface, et
le blocage (214) de l'au moins un des éléments d'interface pour une interaction d'utilisateur en superposant sur l'au moins un des éléments d'interface un élément de confiance amovible, dans lequel l'élément d'application de confiance est affiché de manière constante par-dessus l'élément d'interface restreint, permettant de faire tourner l'application (110) au lieu d'y mettre fin parce qu'au moins un élément d'interface d'application restreint est détecté, dans lequel l'élément d'application de confiance peut être ôté pour débloquer l'au moins un ou les élément(s) d'interface bloqué(s) à la réception d'une demande d'utilisateur,
dans lequel le procédé comprenant en outre :
la détection d'actions d'utilisateur sur les éléments d'interface ;
l'analyse des actions d'utilisateur ; et
le blocage des éléments d'interface, si les actions d'utilisateur correspondent à un motif restreint,
dans lequel une séquence des actions d'utilisateur sur les éléments d'interface est analysée comme un script qui contient plusieurs déplacements d'un élément d'interface à un autre.

8. Procédé selon la revendication 7, dans lequel l'application (110) ayant l'élément d'interface d'application restreint ne peut être fermée du fait de l'absence par l'utilisateur de droits d'administrateur pour la fermer.

9. Procédé selon la revendication 7 ou 8, dans lequel le blocage (214) comprend la superposition de l'au moins un des éléments d'interface avec une image.

10. Procédé selon la revendication 7, comprenant en outre le blocage (214) des éléments d'interface qui proposent à un utilisateur une fenêtre de dialogue pour acheter des jetons intrajeu ou de l'argent intrajeu.

11. Procédé selon la revendication 7, comprenant en outre le contrôle périodique de quelle application (110) active est rendue à un utilisateur.

12. Procédé selon la revendication 7, dans lequel la détection des éléments d'interface est effectuée dans un mode synchrone.

13. Procédé selon la revendication 7, dans lequel la détection des éléments d'interface est effectuée dans un mode asynchrone.

14. Procédé selon la revendication 7, dans lequel la base de données d'éléments d'interface d'application restreints emploie une liste noire d'éléments d'interface pour déterminer les éléments d'interface à bloquer.

15. Procédé selon la revendication 7, comprenant en outre l'emploi d'une liste noire de progiciels d'application pour déterminer les éléments d'interface à bloquer.

16. Produit de programme informatique stocké dans une mémoire (22, 32, 33, 34) couplée à un processeur (21) et exécuté sur le processeur (21), **caractérisé en ce que** le produit de programme informatique est configuré pour exécuter les étapes de l'une des revendications 7-15.
